Europäisches Patentamt

European Patent Office

Office européen des brevets

(11) Veröffentlichungsnummer: **0 415 025 A2**

(12) **EUROPÄISCHE PATENTANMELDUNG**

(21) Anmeldenummer: 90112414.9

(22) Anmeldetag: 29.06.90

(51) Int. Cl.⁵: **F16G 13/16**

(30) Priorität: 26.08.89 DE 3928237

(43) Veröffentlichungstag der Anmeldung:
06.03.91 Patentblatt 91/10

(84) Benannte Vertragsstaaten:
**AT CH DE ES FR GB IT LI NL SE**

(71) Anmelder: **Kabelschlepp Gesellschaft mit beschränkter Haftung**
**Marienborner Strasse 75**
**W-5900 Siegen 1(DE)**

(72) Erfinder: **Mack, Paul-Werner**
**Heinrich-Lübke-Strasse 14**
**W-5963 Wenden 1(DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**W-4000 Düsseldorf 11(DE)**

(54) Abdeckband.

(57) Gegenstand der Erfindung ist ein Abdeckband (8) für Energieführungsketten oder Führungsbahnen von Werkzeugmaschinen bestehend aus einer Vielzahl gelenkig miteinander verbundener Glieder, die an ihren einander zugewandten Seiten mit sich übergreifenden Kupplungselementen versehen sind, wobei zwischen den Kupplungselementen Anschläge (19) zur Begrenzung des gegenseitigen Schwenkwinkels gebildet werden. Zur Verbesserung der Flexibilität und Verringerung des Gewichtes wird vorgeschlagen, zwischen zwei breiten Flachgliedern (13) mit an den Seiten ausgebildeten, gleichen Kupplungsvorsprüngen (15) mit zylindrischem Außenprofil ein schmales Gelenkglied (14) mit beidseitig gleich ausgebildeten Kupplungsaufnahmen (16) mit zylindrischem Innenprofil anzuordnen, wobei Verbindungsstege (17) zwischen den Kupplungsvorsprüngen (15) und den Flachgliedern (13) einerseits und die freien Randflächen der Schenkel (18) der Kupplungsaufnahmen (16) an den Gelenkgliedern (14) andererseits die Anschläge (19) bilden.

Fig.2

EP 0 415 025 A2

# ABDECKBAND

Gegenstand der Erfindung ist ein Abdeckband für Energieführungsketten oder Führungsbahnen von Werkzeugmaschinen bestehend aus einer Vielzahl gelenkig miteinander verbundener Glieder, die an ihren einander zugewandten Seiten mit sich übergreifenden Kupplungselementen versehen sind, wobei zwischen den Kupplungselementen Anschläge zur Begrenzung des gegenseitigen Schwenkwinkels gebildet werden.

Aus der DE-OS 26 22 006 ist eine Energieführungskette bekannt, deren Innenraum mit an der Ober- und Unterseite eingezogenen Abdeckbändern abgedeckt ist, um die Energieleitungen vor Beschädigungen zu schützen Diese bekannten Abdeckbänder können aus Stahlblech oder Kunststoff bestehen. Sie müssen auf ihrer gesamten Länge aus ihren Halterungen herausgezogen werden, wenn an der Energieführungskette ein Konstruktionsteil ausgetauscht oder eine der Energieleitungen ausgetauscht werden soll. Es ist nicht möglich, an einer bestimmten Stelle ein Fenster zu bilden, um den Innenraum der Energieführungskette freizulegen.

Aus der DE-OS 20 20 108 ist eine Gliederbahn zum Abdecken der Führungsbahnen von Werkzeugmaschinen bekannt, die aus einer Vielzahl gleich ausgebildeter und gelenkig miteinander verbundener Glieder besteht. Dabei hat jedes Glied auf einer Seite einen Kupplungsvorsprung mit zylindrischem Profil und auf der anderen Seite eine komplementär ausgebildete Kupplungsaufnahme mit ebenfalls zylindrischem Profil. Zwischen den Kupplungsvorsprüngen und Kupplungsaufnahmen werden Anschläge zur Begrenzung des gegenseitigen Schwenkwinkels gebildet. Außerdem lässt jedes Gelenk nur einen begrenzten Schwenkwinkel zu, so daß eine Anpassung an kleinere Krümmungsradien nicht möglich ist. Aus diesem Grunde kann die bekannte Gliederbahn auch nicht zur Abdeckung von Energieführungsketten verwendet werden.

Davon ausgehend liegt der Erfindung die **Aufgabe** zugrunde, eine vielseitig verwendbare, einfach konstruierte und montierbare Abdeckung zu schaffen, die sich an kleine Krümmungsradien anpassen kann und ein geringes Gewicht hat.

Zur technischen **Lösung** dieser Aufgabe wird vorgeschlagen, daß zwischen zwei breiten Flachgliedern mit an den Seiten ausgebildeten, gleichen Kupplungsvorsprüngen mit zylindrischem Außenprofil ein schmales Gelenkglied mit beidseitig gleich ausgebildeten, zylindrischen Kupplungsaufnahmen angeordnet ist, wobei die Verbindungsstege zwischen den Kupplungsvorsprüngen und den Flachgliedern einerseits und die freien Randflächen der Kupplungsaufnahmen an den Gelenkgliedern andererseits die Anschläge bilden.

Wenn bei diesem Abdeckband die Flachglieder und die Gelenkglieder in der gleichen Dicke ausgebildet werden, die nur ca. drei Millimeter betragen kann, dann ist eine Verwendung sowohl an Energieführungsketten als auch an Führungsbahnen von Werkzeugmaschinen möglich. Zur Gewichtsreduzierung wird vorgeschlagen, die Gelenkglieder aus einem stranggepressten Aluminium und die Flachglieder aus einem extrudierten ABS-Polymerisat herzustellen, welches außer einem geringen Gewicht auch noch hervorragende isolierende Eigenschaften und einen hohen Flammpunkt hat. Durch den Wechsel der Materialien Aluminium und Kunststoff erhält das Abdeckband nicht nur eine statisch stabile Struktur, sondern auch ein gefälliges Äußeres, weil der Kunststoff der Flachglieder eingefärbt werden kann, beispielsweise auch mit den Sicherheitsfarben Schwarz/Gelb.

Ein herausragender **Vorteil** des erfindungsgemäß ausgebildeten Abdeckbandes besteht im Vergleich zum Stand der Technik darin, daß es praktisch an jeder beliebigen Stelle durch seitliches Herausziehen eines Flachgliedes oder eines Gelenkgliedes geöffnet werden kann und sich durch das Doppelgelenk an jedem Gelenkglied besser kleineren Krümmungsradien anzupassen vermag. Durch das Doppelgelenk an jedem Gelenkglied wird nämlich beispielsweise im Vergleich zu der aus der DE-OS 20 20 108 bekannten Gliederbahn bei gleicher Materialstärke und gleicher Anschlagkonstruktion der maximal mögliche Schwenkwinkel zwischen zwei benachbarten Flachgliedern verdoppelt. Erst dadurch ist es möglich, dieses Konstruktionsprinzip für ein Abdeckband auch an Energieführungsketten einzusetzen.

Weitere Einzelheiten und Vorteile ergeben sich aus der nachfolgenden Beschreibung der zugehörigen Zeichnungen, in denen eine bevorzugte Ausführungsform eines erfindungsgemäß ausgebildeten Abdeckbandes in Verbindung mit der Verwendung an einer Energieführungskette dargestellt worden ist. In den Zeichnungen zeigen:

Fig.1 einen Abschnitt einer Energieführungskette mit an der Ober- und Unterseite eingezogenen Abdeckbändern;

Fig. 2 ein Doppelgelenk des Abdeckbandes in Seitenansicht;

Fig. 3 einen Abschnitt der Energieführungskette entlang der Linie III-III in Fig. 1 geschnitten in Seitenansicht;

Fig. 4 das Abdeckband in vergrößerter Darstellung entlang der Linie III-III in Fig. 1 geschnitten;

Fig. 5 das selbsttragende Abdeckband gemäß Fig. 4 in Seitenansicht;

Fig. 6 eine vergrößerte Darstellung einer Gelenkverbindung des Abdeckbandes gemäß Fig. 5 zur Veranschaulichung der Gelenk- und Anschlaggeometrie in Seitenansicht;

Fig. 7 einen Abschnitt eines beidseitig auslenkbaren Abdeckbandes in Seitenansicht;

Fig. 8 eine vergrößerte Darstellung einer Gelenkverbindung des beidseitig auslenkbaren Abdeckbandes zur Veranschaulichung der Gelenk- und Anschlaggeometrie in Seitenansicht.

Eine Energieführungskette wird gebildet aus zwei parallel zueinander und im Abstand voneinander angeordneten Gelenkketten 1 und 2, deren Kettenlaschen 3 durch obere und untere Traversen 4 miteinander verbunden sind. Der gegenseitige Schwenkwinkel der Kettenlaschen 3 ist durch Anschlagnocken 5 begrenzt, welche in größeren Ausnehmungen 6 der benachbarten Kettenlasche 3 eingreifen. Zusammmgehalten werden die zusammengesteckten Kettenlaschen mit Gelenkbolzen 7.

An der Ober- und Unterseite der Energieführungskette sind Abdeckbänder 8 angeordnet, welche den Gegenstand der Erfindung bilden. Festgehalten werden die Abdeckbänder 8 zwischen den Traversen 4 und nach innen vorspringenden Nasen von auf die Kettenlaschen 3 aufgesteckten Gleitkufen 10. Die Gleitkufen 10 greifen mit Verankerungsfüßen 11 in komplementär ausgebildete Verankerungsöffnungen 11 der Kettenlaschen 3 ein.

Jedes Abdeckband 8 besteht aus breiten Flachgliedern 13 und dazwischen angeordneten schmalen Gelenkgliedern 14. Die Flachglieder 13 haben an beiden Seiten gleich ausgebildete Kupplungsvorsprünge 15 mit zylindrischem Außenprofil, während die Gelenkglieder beidseitig gleich ausgebildete Kupplungsaufnahmen 16 mit komplementärem zylindrischen Innenprofil angeordnet sind.

Zwischen Verbindungsstegen 17 der Kupplungsvorsprünge 15 und freien Schenkein 18 der Gelenkglieder 14 werden Anschläge 19 zur Begrenzung des maximalen gegenseitigen Schwenkwinkels gebildet.

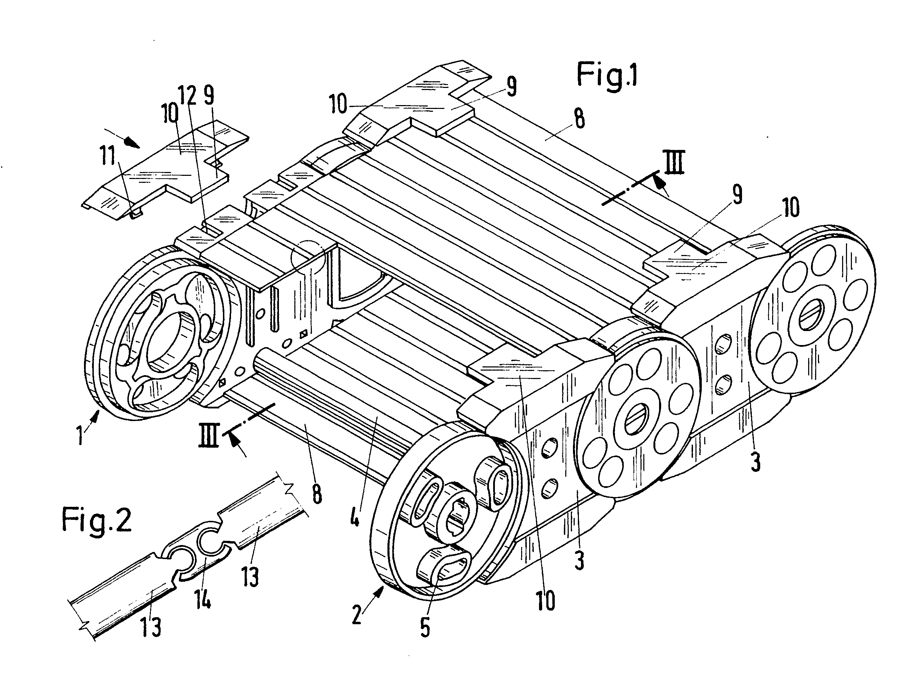

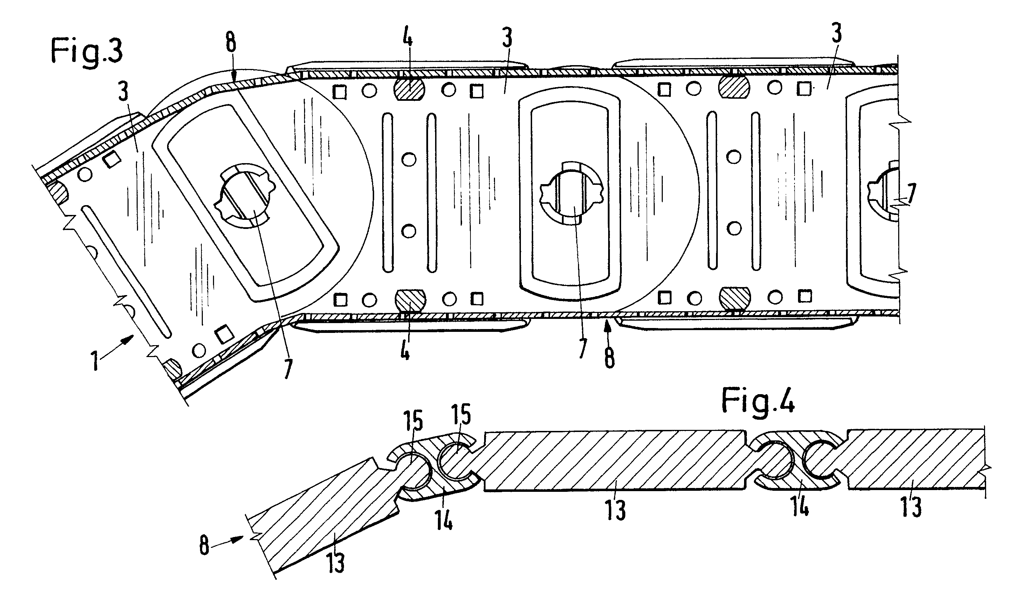

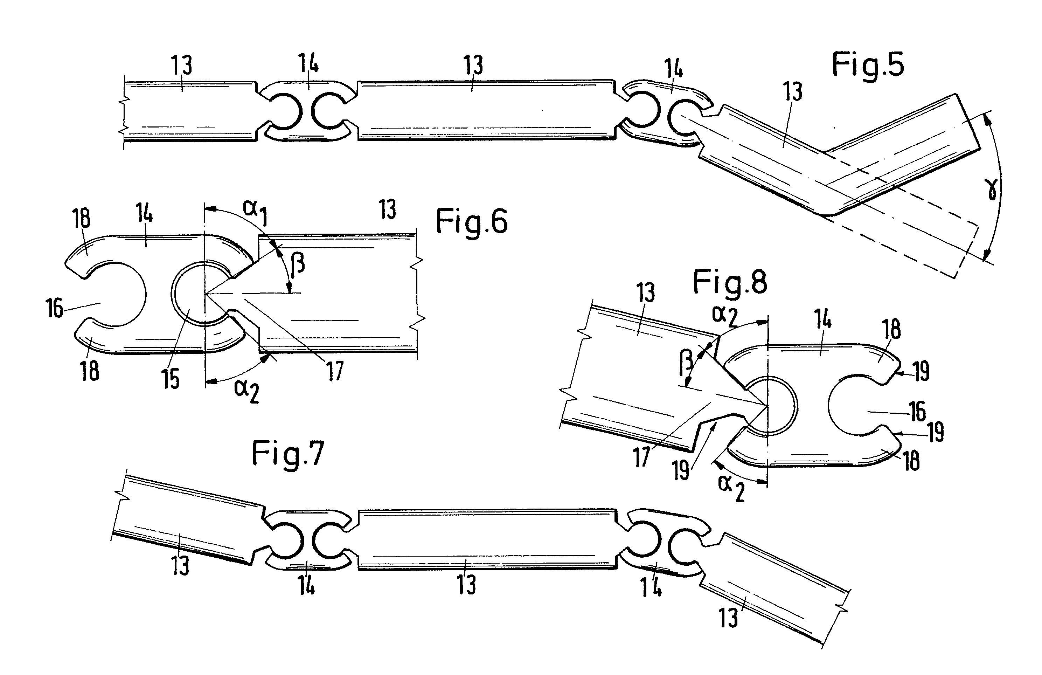

In Verbindung mit einer in den Fig. 1 und 3 dargestellten Energieführungskette, deren oberes Trum in der Regel freitragend ausgebildet ist, d.h. sich nicht nach unten durchbiegen kann, sondern eine gestreckte Lage beibehält, werden auch die Abdeckbänder freitragend ausgebildet, wie es in den Fig. 5 und 6 dargestellt worden ist. Bei diesem freitragend ausgebildeten Abdeckband haben die oberen Schenkel 18 der Gelenkglieder 14 einen größeren Umschlingungswinkel $\alpha_1$ und die unteren Schenkel 18 einen kleineren Umschlingungswinkel $\alpha_2$. Deshalb kann dieses freitragend ausgebildete Abdeckband aus der gestreckten Lage, wie es in der Fig. 5 am linken Gelenkglied 14 dargestellt worden ist, in die nach unten abgeknickte Lage verschwenkt werden, wie es in der Fig. 5 am rechten Gelenkglied 14 dargestellt worden ist. Bei dieser freitragenden Ausführungsform ergänzen sich die Umschlingungswinkel $\alpha_1$ und die Anschlagwinkel $\beta$ der Verbindungsstege 17 zu 90°.

Für die Verwendung als Abdeckband der Führungsbahn einer Werkzeugmaschine können die Flachglieder 13 aber auch beidseitig ausschwenkbar sein, wie es an den beiden Gelenkgliedern 14 der Fig. 7 veranschaulicht worden ist. Zu diesem Zweck haben alle Schenkel 18 des Gelenkgliedes 14 einen kleineren Umschlingungswinkel $\alpha_2$, wie es in der Fig. 8 dargestellt worden ist. Der Umschlingungswinkel $\alpha_2$ und der Anschlagwinkel $\beta$ des Verbindungssteges 17 ergänzen sich zu einem Winkel, der kleiner als 90° ist.

Der gegenseitige Schwenkwinkel zwischen den Flachgliedern 13 und den Gelenkgliedern 14 kann sowohl durch eine entsprechende Bemessung der Umschlingungswinkel $\alpha$ als auch der Anschlagwinkel $\beta$ variiert werden, wobei darauf zu achten ist, daß der Verbund zwischen den Flachgliedern 13 und Gelenkgliedern 14 die maximal auftretenden Zugkräfte aufzunehmen vermag, ohne daß die Gelenkverbindungen sich öffnen. Beide Konstruktionsteile können als Meterware hergestellt und je nach Bedarf abgelängt und montiert werden. Die Flachglieder können aus Kunststoff extrudiert werden. Bewährt hat sich dafür ein ABS-Polymerisat. Die Gelenkglieder können aus Aluminium gepresst werden. Durch den Wechsel des Materials zwischen Kunststoff und Aluminium erhält das Abdeckband eine hervorragende Steifigkeit quer zu seiner Längsrichtung und eine leichtgängige Flexibilität in seiner Längsrichtung. Montiert und demontiert werden die Abdeckbänder indem die beiden Konstruktionsteile übereinandergeschoben werden. Bei der Montage kann diese einfache Manipulation automatisiert werden.

Zu der leichtgängigen Flexibilität in der Längsrichtung kommt als wesentlicher Vorteil hinzu, daß keine Verwerfungen und Stauchungen auftreten können, weil durch die Kombination der Flachglieder 13 mit den Gelenkgliedern 14 die bei thermischen Veränderungen auftretenden Längenänderungen ausgeglichen werden. Die Längsausdehnung der Flachglieder 13 ist nämlich geringer als das gewählte Spiel zwischen dem Flachglied 13 und dem Gelenkglied 14.

**Bezugszeichenliste**

1 Gelenkkette
2 Gelenkkette
3 Kettenlaschen
4 Traverse
5 Anschlagnocken

6 Ausnehmung
7 Gelenkbolzen
8 Abdeckband
9 Nase
10 Gleitkufe
11 Verankerungsfuß
12 Verankerungsöffnung
13 Flachglied
14 Gelenkglied
15 Kupplungsvorsprung
16 Kupplungsaufnahme
17 Verbindungssteg
18 Schenkel
19 Anschlag

**Ansprüche**

1. Abdeckband für Energieführungsketten oder Führungsbahnen von Werkzeugmaschinen bestehend aus einer Vielzahl gelenkig miteinander verbundener Glieder, die an ihren einander zugewandten Seiten mit sich übergreifenden Kupplungselementen versehen sind, wobei zwischen den Kupplungselementen Anschläge zur Begrenzung des gegenseitigen Schwenkwinkels gebildet werden,
**dadurch gekennzeichnet,**
daß zwischen zwei breiten Flachgliedern (13) mit an den Seiten ausgebildeten gleichen Kupplungsvorsprüngen (15) mit zylindrischem Außenprofil ein schmales Gelenkglied (14) mit beidseitig gleich ausgebildeten Kupplungsaufnahmen (16) mit zylindrischem Innenprofil angeordnet ist, wobei Verbindungsstege (17) zwischen den Kupplungsvorsprüngen (15) und den Flachgliedern (13) einerseits und die freien Randflächen an den Schenkeln (18) der Kupplungsaufnahmen (16) an den Gelenkgliedern (14) andererseits die Anschläge (19) bilden.

2. Abdeckband nach Anspruch 1, dadurch gekennzeichnet, daß die Flachglieder (13) und die Gelenkglieder (14) die gleiche Dicke haben.

3. Abdeckband nach den Ansprüchen 1 und 2, dadurch gekennzeichnet, daß die Verbindungsstege (17) der Flachglieder (13) sich in Richtung auf die Kupplungsvorsprünge (15) konisch verjüngen.

4. Abdeckband nach den Ansprüchen 1 bis 3, dadurch gekennzeichnet, daß die Umschlingungswinkel $\alpha$ der Schenkel (18) an den Gelenkgliedern (14) variabel sind.

5. Abdeckband nach den Ansprüchen 1 bis 4, dadurch gekennzeichnet, daß die Flachglieder (13) aus einem extrudierten ABS-Polymerisat, beispielsweise Acryl-Nitril-Butadien-Styrol, und die Gelenkglieder (14) aus einem stranggepressten Aluminium bestehen.

Fig.1

Fig.2

Fig.3

Fig.4

EP 0 415 025 A2

Fig.5

Fig.6

Fig.7

Fig.8